# EUROPEAN PATENT SPECIFICATION

(11) **EP 2 976 904 B1**
(45) Date of publication and mention of the grant of the patent: **27.02.2019**
(21) Application number: 14724878.5
(22) Date of filing: 20.03.2014
(51) Int. Cl.: H04W 12/08, G06Q 20/40, H04W 12/12, G06Q 20/34, G06Q 20/36, G07B 5/06, G07C 9/00, G07F 7/12, G07B 15/02

(54) **CONTROLLING ACCESS TO A TRANSIT SYSTEM**
STEUERUNG DES ZUGANGS ZU EINEM TRANSITSYSTEM
CONTRÔLE DE L'ACCÈS À UN SYSTÈME DE TRANSIT

(30) Priority: 21.03.2013 US 201361804010 P
(43) Date of publication of application: 27.01.2016
(73) Proprietor: Cubic Corporation, San Diego, CA 92123 (US)
(72) Inventor: BUSCH-SORENSEN, Thomas, San Diego, California 92123 (US)
(74) Representative: Gill Jennings & Every LLP
(86) International application number: PCT/US2014/031367
(87) International publication number: WO 2014/153474

(56) References cited:
- GB-A- 2 485 442
- US-A1- 2002 043 566
- US-A1- 2011 208 645

## Description

### BACKGROUND

In transit and other systems, magnetic farecards, certain types of contactless cards, and other fare media are vulnerable to re-writing data, which can reset the fare media to an earlier state. This type of fraud is traditionally caught by running scripts on a central computer that look for inconsistencies in the state or history of the fare media. The central computer typically generates blacklists or whitelists relatively infrequently, such as once a day. In some cases, the blacklists or whitelists may be created even less frequently if flagging a fare media as blacklisted requires operator intervention. Thus, fraudulent fare media may be used to gain access to the transit system for days before a blacklist or whitelist is transmitted from the central computer to access control points throughout the transit system that prevents the fraudulent fare media's usage. This type of vulnerability can lead to substantial monetary losses for a transit system.

GB2485442 describes methods and machines for detecting potential misuse of handheld media for use as fare media in a transit system. Us 2011/0208645 a1 describes a virtual fare card and virtual fare device for enabling a uniquely-identifiable item as fare media in a transit system.

### BRIEF SUMMARY

Techniques are provided herein that enable local fare processing for access control points (entry gates, turnstiles, etc.) in a transit or similar system that can detect fraudulent activity far more quickly than fare processing systems using traditional blacklists or whitelists-and even detecting fraudulent activity at a first occurrence. Embodiments take advantage of the relatively high communication speed and memory capacity of modern transit systems to generate a list of all applicable cards with usage data such as the time of last use, value, or other "one directional data," provide it to each access control point in the system. The access control point, upon reading fare media, can then compare the data on the fare media to data on the list to determine whether fraud may be taking place. The access control point may then determine whether to allow access, flag the fare media, and/or take another action.

An apparatus for granting or denying access at an access control point of a transit system, according to appended claim 1, includes a database local to the access control point of the transit system. The database is configured to store a plurality of identifiers, wherein each identifier of the plurality of identifiers is associated with a plurality of fare media of the transit system, and for each identifier of the plurality of identifiers, a corresponding usage data value indicative of a previous transaction associated with the identifier. The apparatus further includes an input interface, a network interface configured to communicate data via a data communication network, and, a processing unit coupled with the database, the input interface, and the network interface. The processing unit is configured to obtain, with the input interface an identifier of a first fare media, and a first usage data value of the first fare media. The processing unit is further configured to retrieve, from the database, a second usage data value. The second usage data value corresponds with the identifier of the first fare media. The processing unit is also configured to compare the first usage data value with the second usage data value, determine, based on the comparison, whether to grant access at the access control point of the transit system, cause the database to update the second usage data value, and send, via the network interface, information indicative of the updated second usage data value via the data communication network.

The apparatus for granting or denying access at the access control point of the transit system can include one or more of the following features. The database can be configured to store, for each identifier of the plurality of identifiers, a corresponding usage data value comprising one or more of a timestamp, a monetary value, a counter, or a product type. The database can be configured to store, for each identifier of the plurality of identifiers, a corresponding usage data value comprising a timestamp indicative of either or both of a number of hours relative to a reference time, or a number of days relative to a reference date. The apparatus can also include an output interface coupled with the processing unit, and the processing unit can be further configured to cause the output interface to write, to the first fare media, information indicative of the updated second usage data value. The apparatus can comprise an output interface coupled with the processing unit, where the processing unit is further configured to, when the determining whether to grant access at the access control point of the transit system results in a determination to deny access at the access control point of the transit system, cause the output interface to write information to the first fare media flagging the first fare media as fraudulent. The processing unit can be further configured to receive, via the network interface, information indicative of a transaction in the transit system made with a second fare media, identify an entry, in the database, associated with the identifier of the second fare media, and cause the database to update the entry to reflect the transaction made with the second fare media. The processing unit is further configured to control a mechanical function of the access control point based on the determination of whether to grant access at the access control point of the transit system.

A method for determining whether to grant access at an access control point of a transit system, according to appended claim 7, includes obtaining, at the access control point an identifier of a fare media and a first usage data value stored by the fare media. The method also includes retrieving, from a database local to the access control point, a second usage data value, where the second usage data value is associated with the identifier of the fare media and indicative of a previous transaction of the fare media. The method further includes comparing, with a processing unit, the first usage data value with the second usage data value, determining, based on the comparison, whether to grant access at the access control point of the transit system, updating the second usage data value in the database, and sending, via a network interface of the access control point, information indicative of the updated second usage data value via a data communication network.

The method for determining whether to grant access at the access control point of the transit system can include one or more of the following features. Either or both of the first usage data value and the second usage data value comprise at least one of a timestamp, a monetary value, a counter, or a product type. The second usage data value can include a timestamp indicative of either or both of a number of hours relative to a reference time, or a number of days relative to a reference date. The method can include writing, to the fare media, information indicative of the updated second usage data value. Determining whether to grant access at the access control point of the transit system can result in a determination to deny access at the access control point of the transit system, and the method can further include writing information to the fare media flagging the fare media as fraudulent. The method can include receiving information indicative of a transaction in the transit system made with a second fare media, identifying an entry, in the database, associated with the identifier of the second fare media, and updating the entry to reflect the transaction made with the second fare media. The method includes controlling a mechanical function of the access control point based on the determination of whether to grant access at the access control point of the transit system.

A non-transitory computer-readable medium, according to appended claim 13, includes instructions embedded thereon for determining whether to grant access at an access control point of a transit system. The instructions, when executed by a processing unit, cause one or more machines to perform functions that include obtaining, at the access control point, an identifier of a fare media and a first usage data value stored by the fare media. The functions further include retrieving, from a database local to the access control point, a second usage data value, where the second usage data value is associated with the identifier of the fare media and indicative of a previous transaction of the fare media. Functions also include comparing the first usage data value with the second usage data value, determining, based on the comparison, whether to grant access at the access control point of the transit system, updating the second usage data value in the database, and sending, via a network interface of the access control point, information indicative of the updated second usage data value via a data communication network.

The non-transitory computer-readable medium can also include one or more of the following features. The instructions can be configured to allow for either or both of the first usage data value and the second usage data value comprising at least one of a timestamp, a monetary value, a counter, or a product type. Instructions for retrieving the second usage data value can include instructions for retrieving a timestamp indicative of either or both of a number of hours relative to a reference time, or a number of days relative to a reference date. The instructions can include instructions for writing, to the fare media, information indicative of the updated second usage data value, receiving information indicative of a transaction in the transit system made with a second fare media, identifying an entry, in the database, associated with the identifier of the second fare media, and/or updating the entry to reflect the transaction made with the second fare media. The instructions include instructions for controlling a mechanical function of the access control point based on the determination of whether to grant access at the access control point of the transit system.

An example method of calculating a value associated with a fare media at an access control point of a transit system, according to the disclosure, includes obtaining, at the access control point an identifier of the fare media, retrieving, from a database local to the access control point, usage data associated with the identifier of the fare media and indicative of previous usage of the fare media, and calculating, with a processing unit, the value associated with the fare media based on the usage data associated with the identifier of the fare media. The method further includes updating the usage data in the database based on the calculated value, and sending, via a network interface of the access control point, information indicative of the updated usage data value via a data communication network.

The example method can further include one or more of the following features. The usage data value can comprise at least one of a location, or an account balance. The calculated value can comprise a remaining balance in a transit account associated with the fare media. The calculated value comprises a fare.

Numerous benefits are achieved by way of the present invention over conventional techniques. For example, techniques provided herein enable fraud detection at an early stage-far more quickly than systems in which blacklists or whitelists are created by a central computer. In many cases, fraudulent activity can be detected at a first occurrence. This fraud prevention can substantially reduce monetary losses due to fraudulent activity in the transit system. These and other advantages and features of the invention, along with many of its embodiments, are described in more detail in conjunction with the text below and attached figures.

### BRIEF DESCRIPTION OF THE DRAWINGS

FIG. 1 is a simplified block diagram of an example of a portion of a transit system, according to one embodiment.
FIG. 2 is a block diagram of an embodiment of a transit station system.
FIGS. 3A and 3B are simplified block diagrams of access control point computing units, according to different embodiments.
FIGS. 4A and 4B are block diagrams illustrating the flow of information relating to a transaction in the transit system, according to different embodiments.
FIG. 5 is a flow diagram illustrating a method for determining whether to grant access at an access control point of a transit system, according to one embodiment.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The invention is defined in the independent claims. Preferred embodiments are defined in the dependent claims.

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing various embodiments of the invention. It is understood that various changes may be made in the function and arrangement of elements without departing from the scope as set forth in the appended claims.

Techniques are provided herein that enable local fare processing for access control points in transit or similar systems that can detect fraudulent activity far more quickly than fare processing systems using traditional blacklists or whitelists-and even detecting fraudulent activity at a first occurrence. Embodiments take advantage of the relatively high communication speed and memory capacity of modern transit systems to generate a list of all applicable cards with usage data such as the time of last use, value, or other "one directional data," provide it to each access control point in the system. The access control point, upon reading fare media, can then compare the data on the fare media to data on the list to determine whether fraud may be taking place. The access control point may then determine whether to allow access, flag the fare media, and/or take another action.

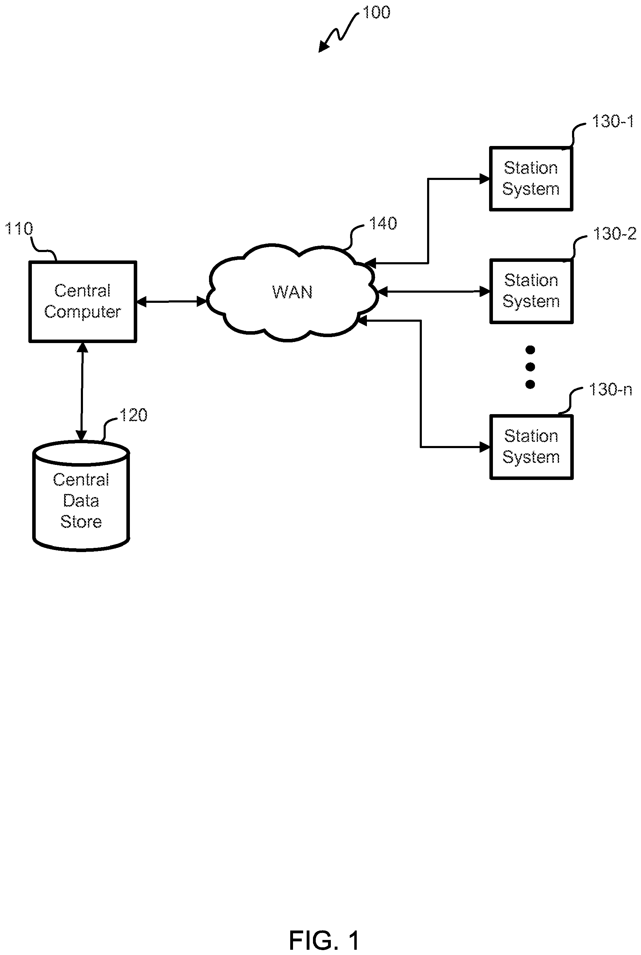

**FIG. 1** illustrates a simplified block diagram of an example of a portion of a transit system 100, according to one embodiment. The transit system 100 provides access to transit services (not shown) to users of the transit system 100, records transactions of the users, collects transit fares, and provides other functions. The transit system 100 can include various forms of transit, including subway, bus, ferry commuter rail, para-transit, etc., or any combination thereof, which can be accessed at stations and/or other locations throughout the transit system 100. As indicated in FIG. 1, the transit system can have any number of stations, with any number of corresponding station systems 130 (e.g., 130-1, 130-2,..., 130-n).

Put generally, the functionality of the transit system 100 is as follows. To gain access to transit services, users can present fare media at access control points, which can include a turnstile, fare gate, platform validator, para-transit vehicle, bus, conductor handheld unit, or fare box at an entry, exit, or other location of a transit station. Transactions of a user, such as passage at a transit access control points, can frequently occur at stations of the transit system 100, although it will be understood that access control points can exist elsewhere, such as on busses or trains. Station systems 130 can gather information regarding transactions and communicate (individually, in batches, on a scheduled/periodic basis, on a real-time/near-real-time/delayed basis, etc.) the information to the central computer 110 using a wide area network (WAN) 140. The WAN 140 can include one or more networks, such as the Internet, that may be public, private, or a combination of both. The WAN 140 could be packet-switched or circuit-switched connections using telephone lines, coaxial cable, optical fiber, wireless communication, satellite links, and/or other mechanisms for communication. Thus, the usage of fare media-such as a transit card (magnetic, contactless, etc.), identification card, bank card, mobile phone, or other item presented for passage at access control points-throughout the transit system 100 can be by the central computer 110 and/or stored (along with related data) in a central data store 120 (e.g., in a database or other data storage structure).

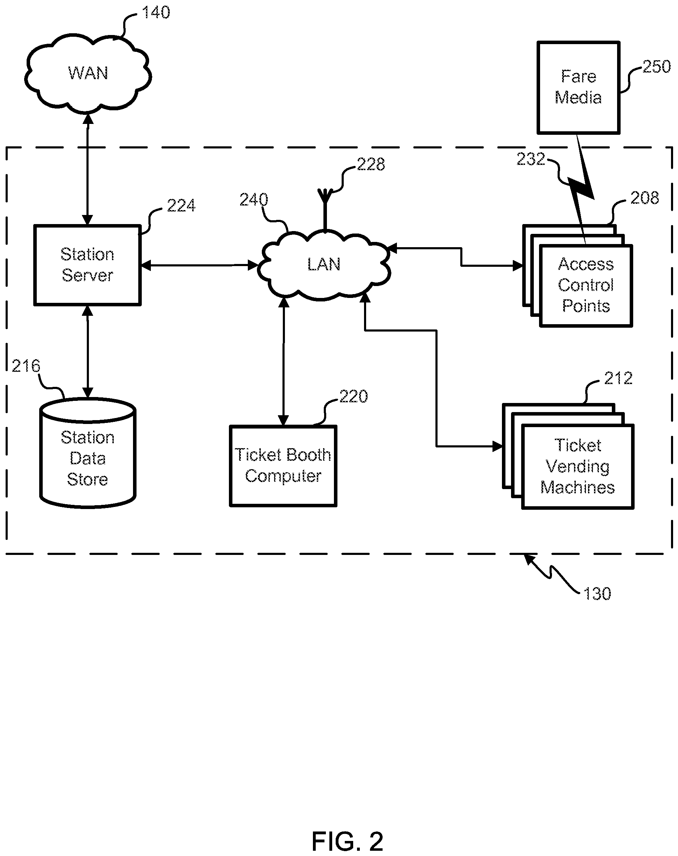

**FIG. 2** shows a block diagram of an embodiment of a station system 130. As discussed above, transit system 100 can include various forms of transit, such as subway, bus, ferry, commuter rail, para-transit, and more. Because different forms of transit may require different functionality, various station systems 130 may have some or all of the components shown in the block diagram. A local area network (LAN) 240 couples the various systems together and could include point-to-point connections, packet switched connections, wireless connections, and/or other networking techniques.

A station server 224 can be coupled to the WAN 140 to allow communication with the central computer 110. Processing of local information can be performed on the station server 224. For example, fare information, schedule information, delay update information, and other transit related information can be processed at the station server 224 and communicated to the various other machines in the transit system 100.

Among other functions, the ticket booth computer 220 and transit vending machines (TVMs) 212 can be used to create and/or distribute fare media 250, such as magnetic fare cards. TVM 212 can be operated by a transit user and/or remotely operated by a transit employee. The ticket booth computer can be a computer within a ticket booth and utilized by a transit employee to issue fare media 250, perform fare media verification, and perform other functions.

The ticket booth computer 220, access control points 208, and TVMs 212 can communicate with the central computer 110 through the station server 224 or directly with the central computer 110 through LAN 240 or WAN 140 (e.g., the Internet). As previously indicated, access control points 208 can communicate transactional information with the station server 224, which can relay transactional information to the central computer 110. This communication can be transmitted via a physical connection or wireless connection via one or more antennas 228. Furthermore, transactional data and/or related lists can be maintained on a station data store 216.

Various media may be used as fare media 250 in the transit system 100. For example, a user may utilize an NFC-enabled mobile device to transmit an identification code and/or other information to an access control point 208 for passage at the access control point 208. The transmission 232 may be wireless, such as by NFC communication. Additionally or alternatively, other media having a unique identification code, readable by access control points 208, may be used. By way of example, but not by limitation, this can include magnetic stripe cards, radio-frequency identification (RFID) tags and/or RFID-tagged items, a smart card, and items having a bar code.

In traditional systems, the access control points 208 do not make any determination of possible fraud, but instead grant access to transit services based on card information (e.g., a card identifier and/or value read from the card) and/or a blacklist or whitelist. For example, an access control point may read card information and check to see if an identifier read from the card is on a blacklist and/or whitelist. If it is on a blacklist, access will be denied. If it is on a whitelist, access will be granted. If it is on neither list, but has enough value to be granted access to the transit system, access will be granted. If it is on neither list, and does not have enough value to be granted access to the transit system, access will be denied.

As previously indicated, however, a transit system that is reliant on blacklists and whitelists can be slow to catch fraud. In traditional systems in which blacklists and/or whitelists are used (described here in relation to components shown in FIGS. 1 and 2), the central computer 110 processes transaction data from the access control points 208 (sent via the station systems 130) to determine if there is any questionable activity related to a card. Such questionable activity could include, for example, a value (e.g., monetary value, ride value, etc.) increasing in instances when it should not (e.g., for fare products where value cannot be reloaded, or, for reloadable products, no indication of a reload transaction), a timestamp of a previous usage that does not match data in the central data store, and the like. This type of data mismatch can be indicative of fraudulent use. Upon finding such questionable activity, the central computer 110 can determine whether to include the identifier of the fare media 250 corresponding to the fraudulent use on a blacklist. This may be automatic, or may include further review from a human operator. Once the blacklist is updated, the blacklist (or the updated portions thereof) is sent from the central computer 110 to access control points 208 throughout the transit system 100. Because the transactions are processed centrally by the central computer 110 (which typically processes the transactions for an entire day during the nighttime or when transit activity is slowed), the time from when a fare media 250 is used fraudulently until it is put on a blacklist can take a day or moreespecially when additional human oversight is involved.

Embodiments of the present invention avoid such delays by enabling fraud detection at the access control points 208.

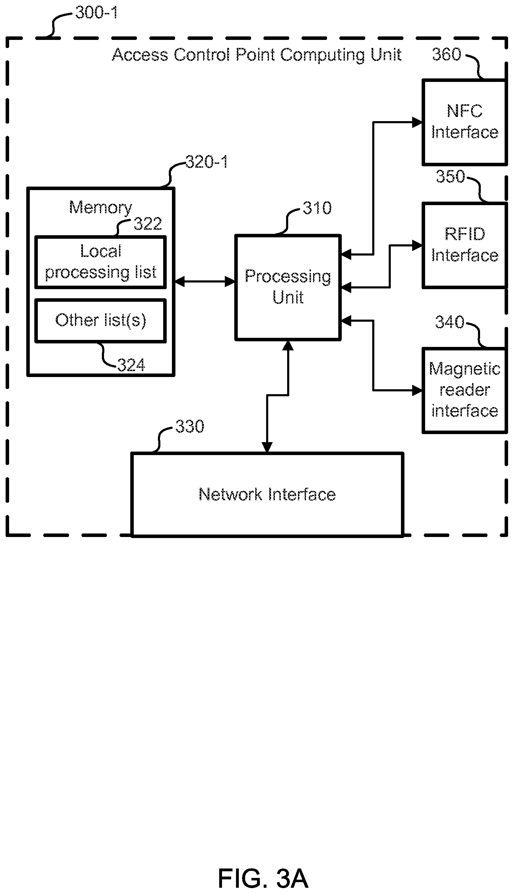

**FIG. 3A** is a simplified block diagram of an access control point computing unit 300-1, according to one embodiment. The access control point computing unit 300-1 can be coupled with and/or integrated into access control points 208 of a transit system 100 and can control certain physical mechanisms and/or other properties of access control points 208 such as to allow or deny passage of a user (e.g., turnstiles, gates, etc.). Thus, the terms "access control point" 208 and "access control point computing unit" 300 are often used interchangeably herein. Among other things, the access control point computing unit 300-1 can be used to read an identification code from fare media and determine whether to permit passage of a user at the access control point 208. Interfaces such as an NFC interface 360, RFID interface 350, and/or magnetic reader interface 340, can be used to obtain information from fare media 250, including an identifier. The identifier code can then be sent to the processing unit 310.

The processing unit 310 can include one or more general-purpose processors, one or more special-purpose processors (such as digital signal processors, graphics acceleration processors, and/or the like), and/or other processing structure(s), which can be configured to perform one or more of the methods described herein. In addition to performing any decryption and/or verifying any security features as described above, the processing unit 310 can utilize information stored in memory 320-1 and/or another data store to determine whether to allow passage of the user at the access control point 208.

According to embodiments herein, access control point computing unit 300-1 can maintain a local processing list 322 in memory 320-1 (e.g., a locally-stored database) and use the local processing list 322 during transactions to determine potential fraud. The local processing list 322 can contain, for example a list of applicable cards (e.g., the identifier for each card) along with an additional piece of data, such as the time of last use, a one-way value or other "one-directional data" that can be used for detection of possible fraud.

During a transaction with a fare media 250, the access control point computing unit 300-1 can retrieve an identifier and/or other data from the fare media 250 via an interface 340, 350, 360, compare it with data stored in the local processing list 322, and take an action based on a result of the comparison. If the result indicates fraudulent activity, for example where a time stamp read from the fare media 250 indicating the most recent transaction is older than a corresponding time stamp on the local processing list 322 (indicating a possible data reset on the fare media 250), the card can be flagged as fraudulent and entry at the access control point can be blocked. Such embodiments can prevent false positives in case a usage list does not get updated or gets updated infrequently.

The local processing list 322 can be fairly small relative to modern storage capabilities. For example, many systems today employ contactless smartcards as fare media, each smartcard having a seven-byte identifier known as a world unique serial number. Usage data-the data related to the use of a certain fare media that can be used for detection of potential fraud-may take a mere one byte in some embodiments. Therefore, the total data required on the local processing list 322 for each card would be eight bytes in such embodiments. Where a system has five million active contactless smartcards, the resulting size of the local processing list 322 would be a mere 40 MB. This can easily be stored on a modern computing system, such as the access control point computing unit 300-1, and a binary search of the list can be performed in less than 100 microseconds, thereby not slowing down traffic through the access point. In other embodiments, usage data may take more than one byte, and a media fare identifier may take more or less than seven bytes.

The type of usage data used for fraud detection can vary, depending on desired functionality and other factors such as the storage and/or network capabilities to transmit a card identifier and usage data for each card. Although various types of usage data could potentially be used, "one-directional" data (i.e., data that progresses in a predictable manner over time) is particularly useful. Such one-directional data can include, for example, a timestamp (indicating a date and/or time of the last transaction of the fare media), a value (e.g., monetary value, number of rides, etc.), a counter, and/or any combination thereof. Determining fraud in such cases is as simple as determining whether the one-directional data read from fare media is in the "wrong direction" when compared with the corresponding value stored on the local processing list. Other usage data could include a fare media or product type, where changes in the fare media or product type (e.g., a change from a stored value pass to a monthly pass) indicate possible fraud.

**Table 1** shows an example portion of a local processing list 322 that helps illustrate how the local processing list 322 could be used where usage data is a timestamp corresponding to the last transaction made with the fare media.

**Table 1: An Example Local Processing List**

| **Media Fare Identifier** | **Timestamp** |
|---|---|
| 0000000001 | 02/15/2014 08:23:48 |
| 0000000008 | 03/07/2014 17:31:14 |
| ⋮ | ⋮ |

As previously indicated a local processing list can include any number of entries, although only two are shown in the example in Table 1. Furthermore, as suggested in the table and detailed further below, the list make not include every fare media issued. Instead the local processing list may have entries only for fare media considered "active" in the transit system and/or station (or other location) in which the access control point is located.

Although the timestamps shown in Table 1 indicate a date (e.g., month, day, year) and time (e.g., hour, minute, second), a timestamp could be stored in the local processing list in any of a variety of ways, again depending on desired functionality and other factors. Embodiments may indicate the time and/or date differently than shown, or simply indicate time or date only. In some embodiments, the timestamp could be represented as a number of days, hours, minutes, etc. from a reference time or date. For example, where the timestamp is represented by a single byte (e.g., a number from 0-255), the byte could contain a number indicating up to 256 hours (e.g., over 10 days) form a reference time, or 256 days (over 2/3 of a year) from a reference date. In such embodiments, the access control point computing unit 300 and/or other system maintaining the local processing list 322 may update the reference date/time, and update the timestamp entries accordingly.

Because a timestamp is a type of one-directional usage data, it can easily be compared with a timestamp on the fare media to determine a potentially fraud transaction. For example, referring to Table 1, an access control point computing unit 300 may use an NFC interface 360 to read the media fare identifier "0000000008" and a timestamp of the latest transaction from a user's contactless smartcard prior to the user's passage through the access point. The processing unit 310 can then quickly search the local processing list (Table 1) to determine the corresponding stored timestamp. If the timestamp read from the smartcard is equal to or later than March 7, 2014 at 5:31:14 PM (or "03/07/2014 17:31:14"), it is indicative that the smartcard is non-fraudulent, and the user can be granted access at the access control point. However, a timestamp read from the smartcard that is earlier than March 7, 2014 at 5:31:14 PM is indicative that the smartcard has likely been reset and is fraudulent. The processing unit 310 can then cause the access control point computing unit 300 to deny the user passage, flag the card as fraudulent, refer the user to a transit system agent, and/or take another action.

The access control point computing unit 300-1 can take any of a variety of actions upon detecting possible fraud, depending on desired functionality, media fare type, access control point type, and other factors. For example, as indicated above, the access control point computing unit 300-1 can deny the user passage and/or refer the user to a transit system agent. In such cases, the agent may-alone or with other transit system representatives and/or systems-determine whether the intended use of the card was fraudulent. Additionally or alternatively, the card may be flagged as fraudulent. This can mean putting the media fare identifier on other list(s) 324 in the memory 320, such as a negative list (or "blacklist"), transmitting the media fare identifier to the station server 224 and/or central computer for tracking the possible fraud and/or creation of one or more station- or system-wide negative lists. Possible actions could also include allowing the user passage, but performing verification with a central system (e.g. to ensure a transaction took place), or denying passage but performing verification. (Verification may result in the fare media identifier being put on a negative or positive list, or updating the fare media's usage data in the local processing list 322.)

In instances where the access control point computing unit 300-1 is able to write to the fare media, the access control point computing unit 300-1 may write to the fare media to flag the fare media as possibly fraudulent. For example, a bit may be dedicated as a flag for fraudulent activity. Prior to checking any lists 322, 324, the access control point computing unit 300-1 can check to see if the bit indicates fraudulent activity. When the bit indicates fraudulent activity, the access control point computing unit 300-1 can deny passage without the need to further check the local processing list 322 to make any further determination. Moreover, the bit can be read and utilized by access control point computing units 300 that may not have a local processing list 322, or may have a local processing list 322 that is not up-to-date.

When the access control point computing units 300-1 completes a transaction with a fare media, the local processing list 322 is updated to reflect the latest usage data of the fare media. In Table 1 above, for example, if the fare media with the identifier "0000000008" was used in a transaction, the access control point computing units 300-1 would update the corresponding timestamp "03/07/2014 17:31:14" to reflect the date and time of the transaction. The access control point computing units 300-1 then uses the network interface 330 to send the transaction data to other devices in the transit system 100, such as access control points 208, station servers 224, and/or the central computer 110 via WAN 140 and/or LAN 240.

The transmission of this data can be collected and sent in batches, delayed to accommodate network traffic, etc. However, given the relatively small amount of data for each transaction (e.g., a seven-byte identifier and a one-byte usage data) and the relatively high-bandwidth connections of modern network interfaces 330 (e.g., 10/100/1000 Mbit/s, 10 Gbit/s, etc.), transaction data can be sent in real time or near-real time, allowing for a transaction to be updated in the local processing lists 322 of all access control points 208 in a transit system 100 in a manner of minutes or less. This is in stark contrast to centrally-generated lists which can take many hours or even days to update.

Although the usage of other list(s) is not needed, an access control point computing units 300-1 with a local processing list 322 may additionally include other list(s) 324, such as negative or positive lists, which may be generated by a central system. If, for example, the identification code is found on a negative list, the processing unit 310 can determine to deny passage of the user without separately checking the local processing list 322. On the other hand, if the identification code is found on a positive list, the processing unit 310 can determine to allow passage of the user without separately checking the local processing list 322. The local processing list 322 however, may still be updated to reflect the transaction, in case the corresponding fare media identifier is removed from the other list(s) 324 and the local processing list 322 is again used to determine possible fraudulent activity for that fare media.

In some embodiments, the other list(s) 324 may be replaced entirely by flagging the usage data of fare media identifiers in the local processing list 322. For example, rather than having a timestamp in the usage data, the usage data of a fare media flagged to be on a blacklist or whitelist can simply include values indicating the fare media is "bad" or "good."

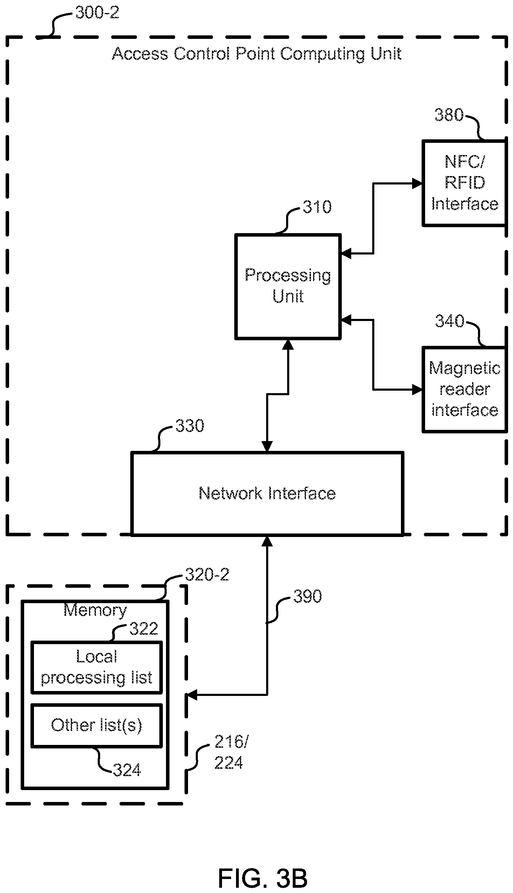

**FIG 3B** is a simplified block diagram of an alternative embodiment of an access control point processing unit 300-2. As illustrated, a memory 320-2 comprising the local processing list 322 and other list(s) 324 may be located at a source external but local to the access control point processing unit 300-2. The external source can include, for example, station server 224 or station data store 216. In such an embodiment, the processing unit 310 may communicate with the external source in deciding whether to allow or deny passage of a user at an access control point 208, or the decision may be made by station server 224. In either case, it is desirable to make the decision quickly, often in 500 milliseconds or less. Thus, in this embodiment, it can be desirable that the connection 390 (e.g., LAN 240 of FIG. 2) between access control point processing unit 300-2 and the external source having memory 320-2 have sufficient speed and minimal latency to provide for a quick decision.

Access control point processing unit 300-2 further illustrates how NFC and RFID interfaces may be combined. Because NFC and RFID technologies and standards largely overlap, it will be understood that the hardware and software required to communicate using those standards can be combined into one unit. Thus, the access control point processing unit 300-2 includes NFC/RFID interface 380, which can receive information such as an identification code from fare media 250 having RFID tags and/or NFC capabilities (such as an NFC-enabled mobile device or contactless payment card).

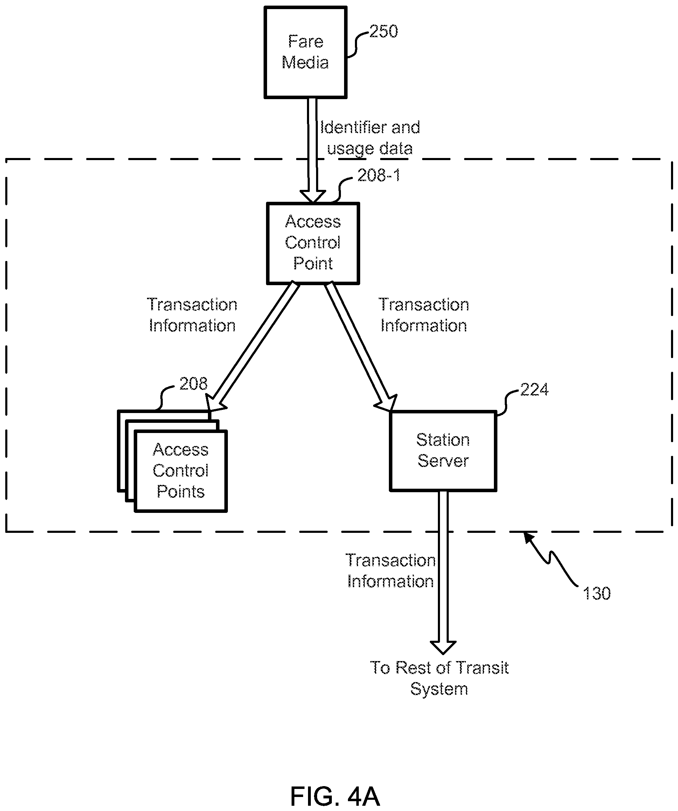

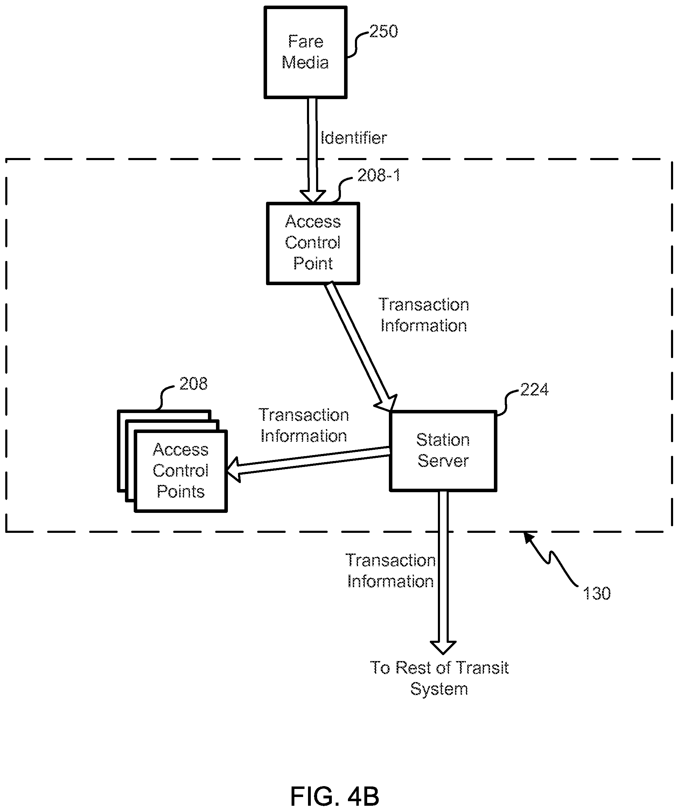

**FIG. 4A** is a block diagram illustrating the flow of information relating to a transaction in the transit system 100, according to one embodiment. As discussed above, transactional information can be transmitted from an access control point 208 (e.g., from the access control computing unit 300 of the access control point 208) to other devices in the transit system 100 to ensure that local processing lists of each device is updated in a quick manner. Although not explicitly shown in FIGS. 4A and 4B, the transmittal of information can be performed by a LAN 240 (including a WLAN) and/or WAN 140 as illustrated in FIGS. 1 and 2.

Here, a fare media 250 is presented to a first access control point 208-1 at a station system 130, and the first access control point 208-1 reads the fare media's identifier and usage data from the fare media 250. The first access control point 208-1 then takes an action (e.g., granting or denying passage of the user), updates its local processing list, and transmits the transaction information to the station server 224 and other access control points 208 in the station. The transaction information includes information indicative of the fare media's identifier, and usage data (updated to reflect the transaction at the first access control point 208-1. The other access control points 208 update their own local processing lists, and the station sever sends the transaction information to the rest of the transit system (e.g., other station servers 224, a central computer 110, etc.). The flow of transaction information for transactions at other access control points 208 would be similar (where each access control point 208 would replace the first access control point 208-1 as shown in FIG. 4A for transactions at that access control point 208).

**FIG. 4B** is a block diagram illustrating the flow of information relating to a transaction in the transit system 100, according to another embodiment. The flow is similar to that shown in FIG. 4A. However, rather than directly sending transaction information directly to other access control points 208, the first access control point 208-1 sends the transaction information to the station server 224, which distributes the transaction information among the other access control points 208 of the station system 130. Thus, the access control points 208 (including the first access control point 208-1) form a hub-and-spoke network with the station server 224, where the station server 224 is the hub.

It will be understood that FIGS. 4A and 4B are provided only as examples. The flow of transaction information can vary, depending on network configuration, desired functionality, and other factors. Moreover, the transmittal of transaction information at any point in the process (e.g., from access control point 208 to station server 224, from station server 224 to a central computer 110 and/or other station servers 224, etc.) can be done individually (e.g., in real time or near-real time) or grouped in batches (e.g., sent periodically, on a scheduled basis, etc.). Again, modern communication bandwidth capabilities can minimize the need for batching such transactional information, thereby helping ensure transactions are propagated to access control points 208 in a relatively quick manner.

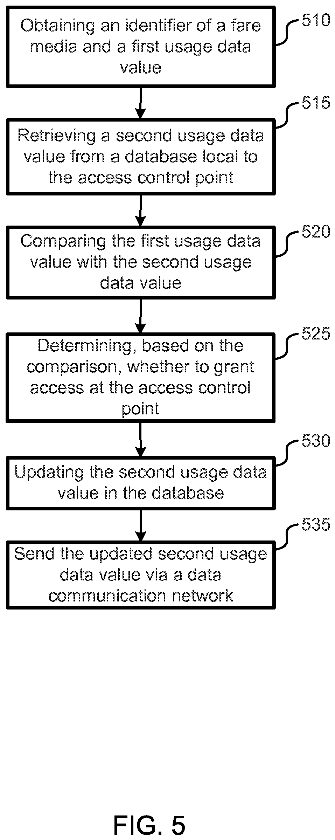

**FIG. 5** is a flow diagram illustrating a method for determining whether to grant access at an access control point of a transit system, according to one embodiment. This method can be performed by a computer or similar component, such as an access control point computing unit 300 as illustrated in FIGS. 3A and 3B. The means for performing the method shown in FIG. 5 can include a processing unit, input interface, database, network interface, etc., as shown in FIGS. 3A and 3B, for example.

At block 510, an identifier of a fare media and a first usage data value can be obtained. Obtaining the identifier of the fare media may be performed by an input interface (e.g., NFC interface, RFID interface, magnetic reader interface, etc.), which may read this information directly from fare media. Additionally or alternatively, this information may be received via a separate reader and/or other device, communicatively coupled with an apparatus performing the method of FIG. 5. The identifier of the fare media can be a serial number, code, pattern, or symbol that uniquely identifies the fare media. And, as previously indicated, usage data value can be a value indicative of a timestamp, counter, monetary value, and/or product type.

At block 515, a second usage data value is retrieved from a database local to the access control point. As indicated in FIGS. 3A and 3B, a database can, for example, comprise and/or store a local processing list in a memory integrated into an access control point computing unit 300 (or other system performing the method of FIG. 5) and/or locally connected with the access control point computing unit 300 via a local area network and/or wireless local area network. Because delays are undesirable at access control points in a transit system, throughput and latency values of information retrieved from the database can be an important consideration.

The second usage data value stored in the database is indicative of a previous transaction of the fare media. Because transaction data can be propagated throughout devices of the transit system quickly, as described above with respect to FIGS. 4A and 4B, the second usage data value stored in the database may likely be the most recent transaction of the fare media in the transit system.

It can further be noted that entries in the database (e.g., local processing list 322 of FIGS. 3A and 3B) may vary, depending on desired functionality, storage and networking capabilities, and/or other factors. In some embodiments, the database of each access control point in the transit system may include the same list of fare media. That list can comprise all issued fare media, a subset of "active" cards (e.g., used within the last month, week, day, etc.), or the like. Some embodiments may include location-specific databases, where the entries in databases of different access control points vary, depending on their location in the transit system. For example, access control points at a station may include only entries for fare media used at that station. When a new fare media is identified at an access control point, it is added to the database of that access control point, and the transaction data is propagated to the other access control points of the station to update their respective databases. Transmitting transaction data in a transit system in which location-specific databases are utilized may be controlled and/or monitored by a central computer, station server, and/or other devices to help determine that transaction data for certain cards is selectively distributed throughout the system only to access control points in that are or likely to be affected.

At block 520, the first usage data value is compared with the second usage data value. As indicated previously, the comparison may be a simple determination of whether "one-directional data" such as a timestamp, counter, etc. is going the "right" way. Additionally or alternatively, the comparison may include a comparison of the product type (or related value type). For example, fare media associated with a stored value may have a monetary value as a usage data value. A fare media associated with a monthly pass may have a timestamp as a usage data value. Thus, determining a product type may be as simple as determining a value type of the usage data value. If the value (product) types of the first and second usage data values do not match, the access control point may decide to deny access.

At block 525, a determination is made as to whether to grant access at the access control point. As previously indicated, the determination may depend on a variety of factors. In cases in which the comparison suggests possible fraudulent activity is very likely, for example, the determination may be to deny access. In cases in which the comparison suggests possible fraudulent activity is uncertain, the determination may be to grant access, but perform some sort of data verification (e.g., with a backend system, with human oversight, etc.). Thus, the determination may rely not only on the result of the comparison at block 520, but other factors such as product type, usage history, location, and the like, which can be analyzed by business rules to determine a proper course of action, including whether to grant access.

At block 530, the second usage data value in the database is updated. The updated value reflects the transaction initiated when the fare media identifier was first obtained in block 510. Furthermore, at block 535, information indicative of the updated second usage data value is sent (e.g., as part of the transaction data) via a data communication network to allow databases elsewhere (e.g., at other access control points in the transit system) to be updated to reflect the transaction associated with the fare media.

It will be understood that FIG. 5 illustrates only one embodiment of a method for determining whether to grant access at an access control point of a transit system. Variations on the illustrated method can occur. For example, blocks may be combined, separated, added, omitted, and/or rearranged. In some embodiments, for example, in which fare media may be written to, the method may include writing information indicative of the updated second usage data value to the fare media (e.g., with an output interface, which may comprise the same interface as the input interface, in cases where the interface is both input and output.) Embodiments may further include activating or otherwise controlling a mechanical function of the access control point (e.g., whether to allow movement of the turnstile, open a gate, etc.) based on the determination of whether to grant access at the access control point of the transit system. A person of ordinary skill in the art will recognize many alterations and variations may be performed to the illustrated method.

Although the embodiments provided herein describe the determination of possible fraudulent activity at an access control point by keeping fare media usage data local to the device, embodiments are not so limited. Additional fare processing can be performed local to an access control point by utilizing the fare media usage data.

For example, in some embodiments, an access control point may be able to calculate a fare for a trip (including a multi-stage trip), based on usage data in the local database (rather than based on data written to the card). This particular feature can be very valuable in account-based transit systems that use a bankcard (or other non-rewritable media) as the fare media.

In some embodiments, the access control point can calculate value left on the card based on usage data stored local to the access control point (e.g., an account balance in a transit account associated with the fare media, a location of entry into the system, etc.). The calculated value can then be sent to update the central database and other local databases throughout the transit system. This functionality could be used to remind a patron to add value to their card when leaving a check-in/check-out system or display information to the patron at an exit gate, such as a warning about low balance or the total trip cost.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

While illustrative and presently preferred embodiments of the disclosed systems, methods, and machine-readable media have been described in detail herein, it is to be understood that the inventive concepts may be otherwise variously embodied and employed, and that the appended claims are intended to be construed to include such variations, except as limited by the prior art.

Furthermore, it can be noted that, although the description and embodiments above were described in relation to a transit system, other embodiments may be utilized in other forms of transportation, stadiums, and/or other venues and systems.

It should be noted that the methods, systems, and devices discussed above are intended merely to be examples. It must be stressed that various embodiments may omit, substitute, or add various procedures or components as appropriate. For instance, it should be appreciated that, in alternative embodiments, the methods may be performed in an order different from that described, and that various steps may be added, omitted, or combined. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention.

Terms, "and" and "or" as used herein, may include a variety of meanings that also is expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of' if used to associate a list, such as A, B, or C, can be interpreted to mean any combination of A, B, and/or C, such as A, AB, AA, AAB, AABBCCC, etc.

Having described several embodiments, it will be recognized by those of skill in the art that various modifications, alternative constructions, and equivalents may be used without departing from the claimed invention. For example, the above elements may merely be a component of a larger system, wherein other rules may take precedence over or otherwise modify the application of the invention. Also, a number of steps may be undertaken before, during, or after the above elements are considered. Accordingly, the above description should not be taken as limiting the scope of the invention.

## Claims

1. An apparatus for granting or denying access at an access control point (208) of a transit system (100), the apparatus comprising:
a database (322) local to the access control point (208) of the transit system (100), wherein the database is configured to store:
a plurality of identifiers, wherein each identifier of the plurality of identifiers is associated with a plurality of fare media of the transit system, and
for each identifier of the plurality of identifiers, a corresponding usage data value indicative of a previous transaction associated with the identifier;
an input interface (340,350,360);
a network interface (330) configured to communicate data via a data communication network (140,240); and
a processing unit (310) coupled with the database (322), the input interface (340,350,360), and the network interface (330), the processing unit (310) configured to:
obtain, at the access control point (208) positioned at an entry location of the transit system (100) and using the input interface (340,350,360):
an identifier of a first fare media (250), and
a first usage data value of the first fare media (250), the first usage data value comprising one-directional data associated with a previous transaction of the first fare media (250) for access to the transit system, wherein the one-directional data comprises at least one of a stored value, a timestamp or a number of rides remaining;
determine whether the first fare media comprises a single bit that is indicative of the fare media as being possibly fraudulent;
upon determining that the first fare media comprises the single bit, denying access to the transit system at the access control point;
upon determining that the first fare media does not comprise the single bit, retrieve, from the database (322), a second usage data value, wherein the second usage data value corresponds with the identifier of the first fare media (250), the second usage data value comprising one-directional data associated with the previous transaction of the first fare media for access to the transit system;
determine possible fraudulent use associated with the first fare media (250) by determining whether the one-directional data of the first usage data value has changed in a proper one-direction in relation to the one-directional data of the second usage data value;
determine, based on the determination of possible fraudulent use, whether to grant access at the access control point (208) of the transit system (100);
cause a mechanical feature of the access control point (208) to move to allow a user of the first fare media (250) access to the transit system (100) based on the determination of whether to grant access at the access control point (208) of the transit system (100);
cause the database (322) to update the second usage data value;
send, via the network interface (330), information indicative of the updated second usage data value via the data communication network (340,350,360);
obtain, at the access control point:
an identifier of a second fare media, and
a prior usage data value of the second fare media, the prior usage data value comprising one-directional data associated with a previous transaction of the second fare media for access to the transit system;
retrieve, from the database, a stored usage data value, wherein the stored usage data value corresponds with the identifier of the second fare media, the stored usage data value comprising one-directional data associated with the previous transaction of the second fare media for access to the transit system;
determine possible fraudulent use associated with the second fare media by determining that the one-directional data of the prior usage data value has not changed in a proper one-direction in relation to the one-directional data of the stored usage data value; and
write, using the access control point, a flag to the second fare media based on the determination of possible fraudulent use, wherein the flag consists of a single bit of data that is indicative of fraudulent use associated with the second fare media.

2. The apparatus for granting or denying access at the access control point (208) of the transit system (100) as recited in claim 1, wherein the database (322) is configured to store, for each identifier of the plurality of identifiers, a corresponding usage data value comprising one or more of:
a timestamp,
a monetary value,
a counter, or
a product type.

3. The apparatus for granting or denying access at the access control point (208) of the transit system (100) as recited in claim 2, wherein the database (322) is configured to store, for each identifier of the plurality of identifiers, a corresponding usage data value comprising a timestamp indicative of either or both of:
a number of hours relative to a reference time, or
a number of days relative to a reference date.

4. The apparatus for granting or denying access at the access control point (208) of the transit system (100) as recited in any of claims 1 to 3, further comprising an output interface coupled with the processing unit (310), wherein the processing unit (310) is further configured to cause the output interface to write, to the first fare media (250), information indicative of the updated second usage data value.

5. The apparatus for granting or denying access at the access control point of the transit system as recited in any of claims 1 to 3, further comprising an output interface coupled with the processing unit (310), wherein the processing unit (310) is further configured to, when the determining whether to grant access at the access control point (208) of the transit system (100) results in a determination to deny access at the access control point (208) of the transit system (100), cause the output interface to write information to the first fare media (250) flagging the first fare media (250) as fraudulent.

6. The apparatus for granting or denying access at the access control point (208) of the transit system (100) as recited in any preceding claim, wherein the processing unit (310) is further configured to:
receive, via the network interface (330), information indicative of a transaction in the transit system (100) made with a third fare media (250);
identify an entry, in the database (322), associated with the identifier of the third fare media (250); and
cause the database (322) to update the entry to reflect the transaction made with the third fare media (250).

7. A method for determining whether to grant access at an access control point (208) of a transit system (100), the method comprising:
obtaining (510), at the access control point (208) positioned at an entry location of the transit system:
an identifier of a fare media (250), and
a first usage data value, stored by the fare media, the first usage data value comprising one-directional data associated with a previous transaction of the first fare media for access to the transit system (100), wherein the one-directional data comprises at least one of a stored value, a timestamp or a number of rides remaining;
determining whether the first fare media comprises a single bit that is indicative of the fare media as being possibly fraudulent;
upon determining that the first fare media comprises the single bit, denying access to the transit system at the access control point;
upon determining that the first fare media does not comprise the single bit, retrieving (515), from a database (322) local to the access control point (208), a second usage data value, wherein the second usage data value is associated with the identifier of the fare media (250) and indicative of a previous transaction of the fare media, the second usage data value comprising one-directional data associated with the previous transaction of the first fare media for access to the transit system;
determining (520), with a processing unit integral to the access control point and coupled with the database, possible fraudulent use associated with the first fare media by determining whether the one-directional data of the first usage data value has changed in a proper one-direction in relation to the one-directional data of the second usage data value;
determining (525), based on the determination of possible fraudulent use, whether to grant access at the access control point of the transit system;
causing a mechanical feature of the access control point to move to allow a user of the first fare media access to the transit system based on the determination of whether to grant access at the access control point of the transit system;
updating (530) the second usage data value in the database (322);
sending (535), via a network interface of the access control point, information indicative of the updated second usage data value via a data communication network
obtaining, at the access control point:
an identifier of a second fare media, and
a prior usage data value of the second fare media, the prior usage data value comprising one-directional data associated with a previous transaction of the second fare media for access to the transit system;
retrieving from the database, a stored usage data value, wherein the stored usage data value corresponds with the identifier of the second fare media, the stored usage data value comprising one-directional data associated with the previous transaction of the second fare media for access to the transit system;
determining possible fraudulent use associated with the second fare media by determining that the one-directional data of the prior usage data value has not changed in a proper one-direction in relation to the one-directional data of the stored usage data value; and
writing, using the access control point, a flag to the second fare media based on the determination of possible fraudulent use, wherein the flag consists of a single bit of data that is indicative of fraudulent use associated with the second fare media.

8. The method for determining whether to grant access at the access control point (208) of the transit system (100) as recited in claim 7, wherein either or both of the first usage data value and the second usage data value comprise at least one of:
a timestamp,
a monetary value,
a counter, or
a product type.

9. The method for determining whether to grant access at the access control point (208) of the transit system (100) as recited in claim 8, wherein the second usage data value comprises a timestamp indicative of either or both of:
a number of hours relative to a reference time, or
a number of days relative to a reference date.

10. The method for determining whether to grant access at the access control point (208) of the transit system (100) as recited in any of claims 7 to 9, further comprising writing, to the fare media, information indicative of the updated second usage data value.

11. The method for determining whether to grant access at the access control point (208) of the transit system (100) as recited in any of claims 7 to 10, wherein determining (525) whether to grant access at the access control point (208) of the transit system (100) results in a determination to deny access at the access control point (208) of the transit system (100), the method further including writing information to the fare media (250) flagging the fare media (250) as fraudulent.

12. The method for determining whether to grant access at the access control point (208) of the transit system (100) as recited in any of claims 7 to 11, further comprising:
receiving information indicative of a transaction in the transit system (100) made with a third fare media (250);
identifying an entry, in the database (322), associated with the identifier of the third fare media (250); and
updating the entry to reflect the transaction made with the third fare media (250).

13. A non-transitory computer-readable medium with instructions embedded thereon for determining whether to grant access at an access control point (208) of a transit system (100), the instructions, when executed by a processing unit (310), cause one or more machines to perform the method of any of claims 7 to 12.

## Patentansprüche

1. Einrichtung zum Gewähren oder Verweigern von Zugang an einem Zugangssteuerungspunkt (208) eines Transitsystems (100), wobei die Einrichtung Folgendes umfasst:
eine Datenbank (322), die lokal für den Zugangssteuerungspunkt (208) des Transitsystems (100) ist, wobei die Datenbank konfiguriert ist, Folgendes zu speichern:
mehrere Identifizierungen, wobei jede Identifizierung der mehreren Identifizierungen mit mehreren Tarifmedien des Transitsystems verknüpft ist, und,
für jede Identifizierung der mehreren Identifizierungen, einen entsprechenden Nutzungsdatenwert, der eine vorangegangene mit der Identifizierung verknüpfte Transaktion kennzeichnet;
eine Eingabeschnittstelle (340, 350, 360);
eine Netzschnittstelle (330), die konfiguriert ist, Daten über ein Datenübertragungsnetz (140, 240) zu übertragen; und
eine Verarbeitungseinheit (310), die an die Datenbank (322), die Eingabeschnittstelle (340, 350, 360) und die Netzschnittstelle (330) gekoppelt ist, wobei die Verarbeitungseinheit (310) zu Folgendem konfiguriert ist:
Erhalten der Folgenden am Zugangssteuerungspunkt (208), der an einer Eingangsposition des Transitsystems (100) positioniert ist, und unter Verwendung der Eingabeschnittstelle (340, 350, 360):
einer Identifizierung eines ersten Tarifmediums (250), und
eines ersten Nutzungsdatenwerts des ersten Tarifmediums (250), wobei der erste Nutzungsdatenwert, der unidirektionale Daten umfasst, die mit einer vorangegangenen Transaktion des ersten Tarifmediums (250) für den Zugang zu dem Transitsystem verknüpft sind, wobei die unidirektionalen Daten einen gespeicherten Wert, eine Zeitangabe und/oder eine Nummer von verbleibenden Fahrten umfassen;
Bestimmen, ob das erste Tarifmedium ein einzelnes Bit umfasst, das kennzeichnet, dass das Tarifmedium möglicherweise betrügerisch ist;
beim Bestimmen, dass das erste Tarifmedium das einzelne Bit umfasst, Verweigern des Zugangs zu dem Transitsystem an dem Zugangssteuerungspunkt,
beim Bestimmen, dass das erste Tarifmedium nicht das einzelne Bit umfasst, Abfragen eines zweiten Nutzungsdatenwerts in der Datenbank (322), wobei der zweite Nutzungsdatenwert der Identifizierung des ersten Tarifmediums (250) entspricht, wobei der zweite Nutzungsdatenwert unidirektionale Daten umfasst, die mit der vorangegangenen Transaktion des ersten Tarifmediums für den Zugang zu dem Transitsystem verknüpft sind;
Bestimmen von möglicherweise betrügerischer Verwendung, die mit dem ersten Tarifmedium (250) verknüpft ist, durch das Bestimmen, ob sich die unidirektionalen Daten des ersten Nutzungsdatenwerts ordnungsgemäß unidirektional in Bezug auf die unidirektionalen Daten des zweiten Nutzungsdatenwerts verändert haben;
Bestimmen, auf Grundlage der Bestimmung von möglicherweise betrügerischer Verwendung, ob der Zugang an dem Zugangssteuerungspunkt (208) des Transitsystems (100) gewährt werden soll;
Veranlassen eines mechanischen Merkmals des Zugangssteuerungspunktes (208), sich zu bewegen, um den Zugang eines Benutzers des ersten Tarifmediums (250) zu dem Transitsystem (100) auf Grundlage der Bestimmung, ob der Zugang zu dem Zugangssteuerungspunkt (208) des Transitsystems (100) gewährt werden soll, zuzulassen;
Veranlassen der Datenbank (322), den zweiten Nutzungsdatenwert zu aktualisieren;
Senden von Informationen, die über das Datenübertragungsnetz (340, 350, 360) den aktualisierten zweiten Nutzungsdatenwert kennzeichnen, über die Netzschnittstelle (330);
Erhalten, am Zugangssteuerungspunkt:
einer Identifizierung eines zweiten Tarifmediums, und
eines vorausgehenden Nutzungsdatenwerts des zweiten Tarifmediums, wobei der vorausgehende Nutzungsdatenwert unidirektionale Daten umfasst, die mit einer vorangegangenen Transaktion des zweiten Tarifmediums für den Zugang zu dem Transitsystem verknüpft sind;
Abfragen eines gespeicherten Nutzungsdatenwerts in der Datenbank, wobei der gespeicherte Nutzungsdatenwert der Identifizierung des zweiten Tarifmediums entspricht, wobei der gespeicherte Nutzungsdatenwert unidirektionale Daten umfasst, die mit der vorangegangenen Transaktion des zweiten Tarifmediums für den Zugang zu dem Transitsystem verknüpft sind;
Bestimmen von mit dem zweiten Tarifmedium verknüpfter möglicherweise betrügerischer Verwendung durch Bestimmen, dass sich die unidirektionalen Daten des vorausgehenden Nutzungsdatenwerts nicht ordnungsgemäß unidirektional in Bezug auf die unidirektionalen Daten des gespeicherten Nutzungsdatenwerts verändert haben; und
Schreiben, unter Verwendung des Zugangssteuerungspunktes, eines Kennzeichens für das zweite Tarifmedium auf Grundlage der Bestimmung von möglicherweise betrügerischer Verwendung, wobei das Kennzeichen aus einem einzelnen Bit von Daten besteht, die mit dem zweiten Tarifmedium verknüpfte betrügerische Verwendung kennzeichnen.

2. Einrichtung zum Gewähren oder Verweigern von Zugang zu dem Zugangssteuerungspunkt (208) des Transitsystems (100) nach Anspruch 1, wobei die Datenbank (322) konfiguriert ist, für jede Identifizierung der mehreren Identifizierungen einen entsprechenden Nutzungsdatenwert zu speichern, Folgendes umfassend:
eine Zeitangabe,
einen Geldwert,
einen Zähler, und/oder
einen Produkttyp.

3. Einrichtung zum Gewähren oder Verweigern von Zugang an dem Zugangssteuerungspunkt (208) des Transitsystems (100) nach Anspruch 2, wobei die Datenbank (322) konfiguriert ist, für jede Identifizierung der mehreren Identifizierungen einen entsprechenden Nutzungsdatenwert zu speichern, umfassend eine Zeitangabe, die Folgendes kennzeichnet:
eine Anzahl von Stunden im Verhältnis zu einer Referenzzeit, und/oder
eine Anzahl von Tagen im Verhältnis zu einem Referenzdatum.

4. Einrichtung zum Gewähren oder Verweigern von Zugang an dem Zugangssteuerungspunkt (208) des Transitsystems (100) nach einem der Ansprüche 1 bis 3, ferner umfassend eine Ausgabeschnittstelle, die an die Verarbeitungseinheit (310) gekoppelt ist, wobei die Verarbeitungseinheit (310) ferner konfiguriert ist, die Ausgabeschnittstelle zu veranlassen, Informationen in das erste Tarifmedium (250) zu schreiben, die den aktualisierten zweiten Nutzungsdatenwert kennzeichnen.

5. Einrichtung zum Gewähren oder Verweigern von Zugang an dem Zugangssteuerungspunkt des Transitsystems nach einem der Ansprüche 1 bis 3, ferner umfassend eine Ausgabeschnittstelle, die an die Verarbeitungseinheit (310) gekoppelt ist, wobei die Verarbeitungseinheit (310) ferner konfiguriert ist, wenn die Bestimmung, ob der Zugang an dem Zugangssteuerungspunkt (208) des Transitsystems (100) gewährt werden soll, in einer Bestimmung resultiert, dass der Zugang an dem Zugangssteuerungspunkt (208) des Transitsystems (100) verweigert werden soll, zu veranlassen, Informationen in das erste Tarifmedium (250) zu schreiben, die das erste Tarifmedium (250) mit einem Kennzeichen als betrügerisch kennzeichnen.

6. Einrichtung zum Gewähren oder Verweigern von Zugang an dem Zugangssteuerungspunkt (208) des Transitsystems (100) nach einem der vorhergehenden Ansprüche, wobei die Verarbeitungseinheit (310) ferner zu Folgendem konfiguriert ist:
Empfangen von Informationen über die Netzschnittstelle (330), die eine mit einem dritten Tarifmedium (250) gemachte Transaktion im Transitsystem (100) kennzeichnen; und
Identifizieren eines Eingangs in der Datenbank (322), der mit der Identifizierung des dritten Tarifmediums (250) verknüpft ist; und
Veranlassen der Datenbank (322), den Eingang zu aktualisieren, um die mit dem dritten Tarifmedium (250) gemachte Transaktion widerzuspiegeln.

7. Verfahren zum Bestimmen, ob der Zugang an dem Zugangssteuerungspunkt (208) eines Transitsystems (100) gewährt werden soll, wobei das Verfahren Folgendes umfasst:
Erhalten (510) der Folgenden an dem Zugangssteuerungspunkt (208), der an einer Eingangsposition des Transitsystems positioniert ist:
einer Identifizierung eines Tarifmediums (250), und
eines ersten Nutzungsdatenwerts, der von dem Tarifmedium gespeichert ist, wobei der erste Nutzungsdatenwert unidirektionale Daten umfasst, die mit einer vorangegangenen Transaktion des ersten Tarifmediums für den Zugang zu dem Transitsystem (100) verknüpft sind, wobei die unidirektionalen Daten einen gespeicherten Wert, eine Zeitangabe und/oder eine Anzahl von verbleibenden Fahrten umfassen;
Bestimmen, ob das erste Tarifmedium ein einzelnes Bit umfasst, das das Tarifmedium als möglicherweise betrügerisch kennzeichnet;
beim Bestimmen, dass das erste Tarifmedium das einzelne Bit umfasst, Verweigern von Zugang zu dem Transitsystem an dem Zugangssteuerungspunkt;
beim Bestimmen, dass das erste Tarifmedium nicht das einzelne Bit umfasst, Abfragen (515) eines zweiten Nutzungsdatenwerts in einer Datenbank (322), die lokal zu dem Zugangssteuerungspunkt (208) ist, wobei der zweite Nutzungsdatenwert mit der Identifizierung des Tarifmediums (250) verknüpft ist und eine vorangegangene Transaktion des Tarifmediums kennzeichnet, wobei der zweite Nutzungsdatenwert unidirektionale Daten umfasst, die mit der vorangegangenen Transaktion des ersten Tarifmediums für den Zugang zu dem Transitsystem verknüpft sind;
Bestimmen (520), mit einer Verarbeitungseinheit, die in dem Zugangssteuerungspunkt integriert ist und an die Datenbank gekoppelt ist, von mit dem ersten Tarifmedium verknüpfter möglicherweise betrügerischer Verwendung, durch das Bestimmen, ob sich die unidirektionalen Daten des ersten Nutzungsdatenwerts ordnungsgemäß unidirektional in Bezug auf die unidirektionalen Daten des zweiten Nutzungsdatenwerts verändert haben;
Bestimmen (525), auf Grundlage der Bestimmung von möglicherweise betrügerischer Verwendung, ob der Zugang an dem Zugangssteuerungspunkt des Transitsystems gewährt werden soll;
Veranlassen eines mechanischen Merkmals des Zugangssteuerungspunktes, sich zu bewegen, um den Zugang eines Benutzers des ersten Tarifmediums zu dem Transitsystem auf Grundlage des Bestimmens, ob der Zugang an dem Zugangssteuerungspunkt des Transitsystems gewährt werden soll, zuzulassen;
Aktualisieren (530) des zweiten Nutzungsdatenwerts in der Datenbank (322);
Senden (535), über eine Netzschnittstelle des Zugangssteuerungspunktes, von Informationen, die den aktualisierten zweiten Nutzungsdatenwert über ein Datenübertragungsnetz kennzeichnen,
Erhalten der Folgenden am Zugangssteuerungspunkt:
einer Identifizierung für ein zweites Tarifmedium, und
eines vorausgehenden Nutzungsdatenwerts des zweiten Tarifmediums, wobei der vorausgehende Nutzungsdatenwert unidirektionale Daten umfasst, die mit einer vorangegangenen Transaktion des zweiten Tarifmediums für den Zugang zu dem Transitsystem verknüpft sind;
Abfragen eines gespeicherten Nutzungsdatenwerts in der Datenbank, wobei der gespeicherte Nutzungsdatenwert der Identifizierung des zweiten Tarifmediums entspricht, wobei der gespeicherte Nutzungsdatenwert unidirektionale Daten umfasst, die mit der vorangegangenen Transaktion des zweiten Tarifmediums für den Zugang zu dem Transitsystem verknüpft sind;
Bestimmen von mit dem zweiten Tarifmedium verknüpfter möglicherweise betrügerischer Verwendung durch Bestimmen, dass sich die unidirektionalen Daten des vorausgehenden Nutzungsdatenwerts nicht ordnungsgemäß unidirektional in Bezug auf die unidirektionalen Daten des gespeicherten Nutzungsdatenwerts verändert haben; und
Schreiben, unter Verwendung des Zugangssteuerungspunktes, einer Kennzeichnung für das zweite Tarifmedium auf Grundlage der Bestimmung von möglicherweise betrügerischer Verwendung, wobei die Kennzeichnung aus einem einzelnen Bit von Daten besteht, das mit dem zweiten Tarifmedium verknüpfte betrügerische Verwendung kennzeichnet.

8. Verfahren zum Bestimmen, ob der Zugang an dem Zugangssteuerungspunkt (208) des Transitsystems (100) gewährt werden soll, nach Anspruch 7, wobei der erste Nutzungsdatenwert und/oder der zweite Nutzungsdatenwert Folgendes umfasst:
eine Zeitangabe
einen Geldwert,
einen Zähler, und/oder
einen Produkttyp.

9. Verfahren zum Bestimmen, ob der Zugang an dem Zugangssteuerungspunkt (208) des Transitsystems (100) gewährt werden soll, nach Anspruch 8, wobei der zweite Nutzungsdatenwert eine Zeitangabe umfasst, die Folgendes kennzeichnet:
eine Anzahl von Stunden im Verhältnis zu einer Referenzzeit, und/oder
eine Anzahl von Tagen im Verhältnis zu einem Referenzdatum.

10. Verfahren zum Bestimmen, ob der Zugang an dem Zugangssteuerungspunkt (208) des Transitsystems (100) gewährt werden soll, nach einem der Ansprüche 7 bis 9, ferner umfassend das Schreiben von Informationen, die den aktualisierten zweiten Nutzungsdatenwert kennzeichnen, in das Tarifmedium.

11. Verfahren zum Bestimmen, ob der Zugang an dem Zugangssteuerungspunkt (208) des Transitsystems (100) gewährt werden soll, nach einem der Ansprüche 7 bis 10, wobei das Bestimmen (525), ob der Zugang an dem Zugangssteuerungspunkt (208) des Transitsystems (100) gewährt werden soll, in einer Bestimmung resultiert, dass der Zugang an dem Zugangssteuerungspunkt (208) des Transitsystems (100) verweigert werden soll, wobei das Verfahren ferner das Schreiben von Informationen in das Tarifmedium (250) einschließt, das das Tarifmedium (250) mit einem Kennzeichen als betrügerisch kennzeichnet.

12. Verfahren zum Bestimmen, ob der Zugang an dem Zugangssteuerungspunkt (208) des Transitsystems (100) gewährt werden soll, nach einem der Ansprüche 7 bis 11, ferner umfassend:
Empfangen von Informationen, die eine mit einem dritten Tarifmedium (250) gemachte Transaktion in dem Transitsystem (100) kennzeichnen;
Identifizieren eines Eingangs in der Datenbank (322), der mit der Identifizierung des dritten Tarifmediums (250) verknüpft ist; und
Aktualisieren des Eingangs, um die mit dem dritten Tarifmedium (250) gemachte Transaktion widerzuspiegeln.

13. Nicht-transitorisches computerlesbares Medium mit darauf eingebetteten Anweisungen zum Bestimmen, ob der Zugang an einem Zugangssteuerungspunkt (208) eines Transitsystems (100) gewährt werden soll, wobei die Anweisungen, wenn sie von einer Verarbeitungseinheit (310) ausgeführt werden, eine oder mehrere Maschinen veranlassen, das Verfahren nach einem der Ansprüche 7 bis 12 durchzuführen.

## Revendications

1. Appareil pour accorder ou refuser l'accès au niveau d'un point de contrôle d'accès (208) d'un système de transport en commun (100), l'appareil comprenant :
une base de données (322) locale pour le point de contrôle d'accès (208) du système de transport en commun (100), dans lequel la base de données est configurée pour stocker :
une pluralité d'identifiants, dans lequel chaque identifiant de la pluralité d'identifiants est associé à une pluralité de supports tarifaires du système de transport en commun, et
pour chaque identifiant de la pluralité d'identifiants, une valeur de données d'emploi correspondante indicative d'une transaction précédente associée à l'identifiant ;
une interface de saisie (340, 350, 360) ;
une interface réseau (330) configurée pour communiquer des données via un réseau de communication de données (140, 240) ; et
une unité de traitement (310) couplée à la base de données (322), à l'interface de saisie (340, 350, 360) et à l'interface réseau (330), l'unité de traitement (310) étant configurée pour :
obtenir, au niveau du point de contrôle d'accès (208) positionné à un site d'entrée du système de transport en commun (100) et à l'aide de l'interface de saisie (340, 350, 360) :
un identifiant d'un premier support tarifaire (250), et
une première valeur de données d'emploi du premier support tarifaire (250), la première valeur de données d'emploi comprenant des données unidirectionnelles associées à une transaction précédente du premier support tarifaire (250) pour accéder au système de transport en commun, dans lequel les données unidirectionnelles comprennent au moins l'un d'une valeur stockée, d'une estampille temporelle ou d'un nombre de voyages restants ;
déterminer si le premier support tarifaire comprend un bit unique qui est indicatif du support tarifaire comme étant éventuellement frauduleux ;
lors de la détermination que le premier support tarifaire comprend le bit unique, refuser l'accès au système de transport en commun au niveau du point de contrôle d'accès ;
lors de la détermination que le premier support tarifaire ne comprend pas le bit unique,
récupérer, à partir de la base de données (322), une seconde valeur de données d'emploi, dans lequel la seconde valeur de données d'emploi correspond à l'identifiant du premier support tarifaire (250), la seconde valeur de données d'emploi comprenant des données unidirectionnelles associées à la transaction précédente du premier support tarifaire pour accéder au système de transport en commun ;
déterminer une utilisation frauduleuse éventuelle associée au premier support tarifaire (250) en déterminant si les données unidirectionnelles de la première valeur de données d'emploi ont changé dans une direction unique correcte par rapport aux données unidirectionnelles de la seconde valeur de données d'emploi ;
déterminer, d'après la détermination d'utilisation frauduleuse éventuelle, s'il faut accorder l'accès au niveau du point de contrôle d'accès (208) du système de transport en commun (100) ;
provoquer un déplacement d'un élément mécanique du point de contrôle d'accès (208) pour permettre à un utilisateur du premier support tarifaire (250) d'accéder au système de transport en commun (100) d'après la détermination permettant de savoir s'il faut accorder l'accès au niveau du point de contrôle d'accès (208) du système de transport en commun (100) ;
amener la base de données (322) à mettre à jour la seconde valeur de données d'emploi ;
envoyer, via l'interface réseau (330), des informations indicatives de la seconde valeur de données d'emploi mise à jour via le réseau de communication de données (340, 350, 360) ;
obtenir, au niveau du point de contrôle d'accès :
un identifiant d'un deuxième support tarifaire, et
une valeur de données d'emploi antérieure du deuxième support tarifaire, la valeur de données d'emploi antérieure comprenant des données unidirectionnelles associées à une transaction précédente du deuxième support tarifaire pour accéder au système de transport en commun ;
récupérer, à partir de la base de données, une valeur de données d'emploi stockée, dans lequel la valeur de données d'emploi stockée correspond à l'identifiant du deuxième support tarifaire, la valeur de données d'emploi stockée comprenant des données unidirectionnelles associées à la transaction précédente du deuxième support tarifaire pour accéder au système de transport en commun ;
déterminer une utilisation frauduleuse éventuelle associée au deuxième support tarifaire en déterminant que les données unidirectionnelles de la valeur de données d'emploi antérieure n'ont pas changé dans une direction unique correcte par rapport aux données unidirectionnelles de la valeur de données d'emploi stockée ; et
écrire, à l'aide du point de contrôle d'accès, un drapeau sur le deuxième support tarifaire d'après la détermination d'une utilisation frauduleuse éventuelle, dans lequel le drapeau consiste en un bit unique de données qui est indicatif d'une utilisation frauduleuse associée au deuxième support tarifaire.

2. Appareil pour accorder ou refuser l'accès au niveau du point de contrôle d'accès (208) du système de transport en commun (100) selon la revendication 1, dans lequel la base de données (322) est configurée pour stocker, pour chaque identifiant de la pluralité d'identifiants, une valeur de données d'emploi correspondante comprenant un ou plusieurs parmi :
une estampille temporelle,
une valeur monétaire,
un compteur, ou
un type de produit.

3. Appareil pour accorder ou refuser l'accès au niveau du point de contrôle d'accès (208) du système de transport en commun (100) selon la revendication 2, dans lequel la base de données (322) est configurée pour stocker, pour chaque identifiant de la pluralité d'identifiants, une valeur de données d'emploi correspondante comprenant une estampille temporelle indicative de l'un ou l'autre ou des deux éléments suivants :
un nombre d'heures par rapport à un temps de référence, ou
un nombre de jours par rapport à une date de référence.

4. Appareil pour accorder ou refuser l'accès au niveau du point de contrôle d'accès (208) du système de transport en commun (100) selon l'une quelconque des revendications 1 à 3, comprenant en outre une interface de sortie couplée à l'unité de traitement (310), dans lequel l'unité de traitement (310) est en outre configurée pour amener l'interface de sortie à écrire, sur le premier support tarifaire (250), des informations indicatives de la seconde valeur de données d'emploi mise à jour.

5. Appareil pour accorder ou refuser l'accès au niveau du point de contrôle d'accès du système de transport en commun selon l'une quelconque des revendications 1 à 3, comprenant en outre une interface de sortie couplée à l'unité de traitement (310), dans lequel l'unité de traitement (310) est en outre configurée, lorsque la détermination permettant de savoir s'il faut accorder l'accès au niveau du point de contrôle d'accès (208) du système de transport en commun (100) aboutit à une détermination de refus d'accès au niveau du point de contrôle d'accès (208) du système de transport en commun (100), pour amener l'interface de sortie à écrire des informations sur le premier support tarifaire (250) signalant à l'aide d'un drapeau le premier support tarifaire (250) comme étant frauduleux.

6. Appareil pour accorder ou refuser l'accès au niveau du point de contrôle d'accès (208) du système de transport en commun (100) selon l'une quelconque des revendications précédentes, dans lequel l'unité de traitement (310) est en outre configurée pour :
recevoir, via l'interface réseau (330), des informations indicatives d'une transaction dans le système de transport en commun (100) réalisée avec un troisième support tarifaire (250) ;
identifier une entrée, dans la base de données (322), associée à l'identifiant du troisième support tarifaire (250) ; et
amener la base de données (322) à mettre à jour l'entrée pour refléter la transaction réalisée avec le troisième support tarifaire (250).

7. Procédé pour déterminer s'il faut accorder l'accès au niveau d'un point de contrôle d'accès (208) d'un système de transport en commun (100), le procédé comprenant :
l'obtention (510), au niveau du point de contrôle d'accès (208) positionné à un site d'entrée du système de transport en commun :
d'un identifiant d'un support tarifaire (250), et
d'une première valeur de données d'emploi, stockée par le support tarifaire, la première valeur de données d'emploi comprenant des données unidirectionnelles associées à une transaction précédente du premier support tarifaire pour accéder au système de transport en commun (100), dans lequel les données unidirectionnelles comprennent au moins l'un d'une valeur stockée, d'une estampille temporelle ou d'un nombre de voyages restants ;
le fait de déterminer si le premier support tarifaire comprend un bit unique qui est indicatif du support tarifaire comme étant éventuellement frauduleux ;
lors de la détermination que le premier support tarifaire comprend le bit unique, le refus d'accès au système de transport en commun au niveau du point de contrôle d'accès ;
lors de la détermination que le premier support tarifaire ne comprend pas le bit unique, la récupération (515), à partir d'une base de données (322) locale pour le point de contrôle d'accès (208), d'une seconde valeur de données d'emploi, dans lequel la seconde valeur de données d'emploi est associée à l'identifiant du support tarifaire (250) et indicative d'une transaction précédente du support tarifaire, la seconde valeur de données d'emploi comprenant des données unidirectionnelles associées à la transaction précédente du premier support tarifaire pour accéder au système de transport en commun ;
la détermination (520), avec une unité de traitement intégrée au point de contrôle d'accès et couplée à la base de données, d'une utilisation frauduleuse éventuelle associée au premier support tarifaire en déterminant si les données unidirectionnelles de la première valeur de données d'emploi ont changé dans une direction unique correcte par rapport aux données unidirectionnelles de la seconde valeur de données d'emploi ;
le fait de déterminer (525), d'après la détermination d'une utilisation frauduleuse éventuelle, s'il faut accorder l'accès au niveau du point de contrôle d'accès du système de transport en commun ;
le fait de provoquer le déplacement d'un élément mécanique du point de contrôle d'accès pour permettre à un utilisateur du premier support tarifaire d'accéder au système de transport en commun d'après la détermination permettant de savoir s'il faut accorder l'accès au niveau du point de contrôle d'accès du système de transport en commun ;
la mise à jour (530) de la seconde valeur de données d'emploi dans la base de données (322) ;
l'envoi (535), via une interface réseau du point de contrôle d'accès, d'informations indicatives de la seconde valeur de données d'emploi mise à jour via un réseau de communication de données
l'obtention, au niveau du point de contrôle d'accès :
d'un identifiant d'un deuxième support tarifaire, et
d'une valeur de données d'emploi antérieure du deuxième support tarifaire, la valeur de données d'emploi antérieure comprenant des données unidirectionnelles associées à une transaction précédente du deuxième support tarifaire pour accéder au système de transport en commun ;
la récupération à partir de la base de données, d'une valeur de données d'emploi stockée, dans lequel la valeur de données d'emploi stockée correspond à l'identifiant du deuxième support tarifaire, la valeur de données d'emploi stockée comprenant des données unidirectionnelles associées à la transaction précédente du deuxième support tarifaire pour accéder au système de transport en commun ;
la détermination d'une utilisation frauduleuse éventuelle associée au deuxième support tarifaire en déterminant que les données unidirectionnelles de la valeur de données d'emploi antérieure n'ont pas changé dans une direction unique correcte par rapport aux données unidirectionnelles de la valeur de données d'emploi stockée ; et
l'écriture, à l'aide du point de contrôle d'accès, d'un drapeau sur le deuxième support tarifaire d'après la détermination d'une utilisation frauduleuse éventuelle, dans lequel le drapeau consiste en un bit unique de données qui est indicatif d'une utilisation frauduleuse associée au deuxième support tarifaire.

8. Procédé pour déterminer s'il faut accorder l'accès au niveau du point de contrôle d'accès (208) du système de transport en commun (100) selon la revendication 7, dans lequel l'une ou l'autre de la première valeur de données d'emploi et de la seconde valeur de données d'emploi ou les deux comprennent au moins l'un parmi :
une estampille temporelle,
une valeur monétaire,
un compteur, ou
un type de produit.

9. Procédé pour déterminer s'il faut accorder l'accès au niveau du point de contrôle d'accès (208) du système de transport en commun (100) selon la revendication 8, dans lequel la seconde valeur de données d'emploi comprend une estampille temporelle indicative de l'un ou l'autre ou des deux éléments suivants :
un nombre d'heures par rapport à un temps de référence, ou
un nombre de jours par rapport à une date de référence.

10. Procédé pour déterminer s'il faut accorder l'accès au niveau du point de contrôle d'accès (208) du système de transport en commun (100) selon l'une quelconque des revendications 7 à 9, comprenant en outre l'écriture, sur le support tarifaire, d'informations indicatives de la seconde valeur de données d'emploi mise à jour.

11. Procédé pour déterminer s'il faut accorder l'accès au niveau du point de contrôle d'accès (208) du système de transport en commun (100) selon l'une quelconque des revendications 7 à 10, dans lequel le fait de déterminer (525) s'il faut accorder l'accès au niveau du point de contrôle d'accès (208) du système de transport en commun (100) aboutit à une détermination de refus d'accès au niveau du point de contrôle d'accès (208) du système de transport en commun (100), le procédé comportant en outre l'écriture d'informations sur le support tarifaire (250), signalant à l'aide d'un drapeau le support tarifaire (250) comme étant frauduleux.

12. Procédé pour déterminer s'il faut accorder l'accès au niveau du point de contrôle d'accès (208) du système de transport en commun (100) selon l'une quelconque des revendications 7 à 11, comprenant en outre :
la réception d'informations indicatives d'une transaction dans le système de transport en commun (100) réalisée avec un troisième support tarifaire (250) ;
l'identification d'une entrée, dans la base de données (322), associée à l'identifiant du troisième support tarifaire (250) ; et
la mise à jour de l'entrée pour refléter la transaction réalisée avec le troisième support tarifaire (250).

13. Support lisible par ordinateur non transitoire sur lequel sont incorporées des instructions pour déterminer s'il faut accorder l'accès au niveau d'un point de contrôle d'accès (208) d'un système de transport en commun (100), les instructions, lorsqu'elles sont exécutées par une unité de traitement (310), amènent une ou plusieurs machines à réaliser le procédé selon l'une quelconque des revendications 7 à 12.
